# EUROPEAN PATENT APPLICATION

(11) **EP 4 668 217 A1**
(43) Date of publication of application: **24.12.2025**
(21) Application number: 24182603.1
(22) Date of filing: 17.06.2024
(51) Int. Cl.: G06T 19/00

(54) **METHOD FOR AUGMENTED REALITY PUTT PREDICTION IN GOLF BROADCASTS**

(71) Applicant: Kles, Alexander, 1030 Wien (AT)
(72) Inventor: Kles, Alexander, 1030 Wien (AT)
(74) Representative: Schwarz & Partner Patentanwälte GmbH

(57) **Abstract**

The invention relates to a method for augmenting live television golf broadcasts in real time using a broadcast camera (9), comprising the steps: providing a virtual 3D mesh (3), comprising the topography of an area (1), a ball location (4) within the area (1) and a hole location (5) within the area (1); calculating a ball trajectory (7), an aiming point (8) and an expected break, and adding them to the 3D mesh (3); aligning the 3D mesh (3) with the view of the broadcast camera (9) by comparing a length scale to the break, wherein the augmented broadcast comprises an overlay of the ball trajectory (7) and the aiming point (8).

## Description

The present invention relates to a method for augmenting live television golf broadcasts in real time using a broadcast camera. The invention further relates to a data processing device, a computer program product, and a computer-readable storage medium comprising instructions which, when executed by a computer, cause the computer to carry out the steps of above referenced method.

Golf is a popular sport in which players use various clubs to hit balls into a series of holes on a course in as few strokes as possible. A standard round consists of 18 holes, each beginning on a teeing ground and culminating at a putting green. The objective is to complete each hole by hitting the ball from the teeing ground, along the fairway, and into the hole, which is marked by a removable flagstick (also known as pin), using as few strokes as possible.

Golf tournaments are often broadcast on television, providing extensive coverage to a global audience. Golf TV broadcasts include features like broadcast overlays, which display important information such as player scores, hole layouts, live statistics, as well as ball trajectories. This enhances the viewing experience by providing real-time updates and additional context for viewers. Especially on the putting green, displaying a possible trajectory of the ball towards the hole is a useful aide for viewers, as the putting green topography and the difficulty of aiming the ball towards the hole associated with a non-flat topography might not be easily discernable over a TV broadcast.

Putting is the act of striking the ball with the objective of rolling it into the hole. It is considered a crucial part of the game, as it often determines the final outcome of a hole. As a viewer, it is often not easily recognizable how a golfer should aim and strike the ball such that it rolls into the hole. This is for instance due to small undulations in the ground which cause the ball to take a non-straight trajectory. The golfer must calculate an expected ball trajectory inside their head, a process not visible to spectators. To aid viewers, a video overlay of a computer-calculated ideal ball trajectory can be beneficial, providing a clearer understanding of how the golfer needs to putt the ball path for the ball. To aid viewers, a video overlay showing the computer-calculated ideal ball trajectory can be highly beneficial. It provides a clearer understanding of the optimal path the golfer needs to follow for a successful putt. This enhancement helps viewers better appreciate and understand the strategy and skill required for a successful put.

Generating an optimal ball trajectory (or a trajectory envelope, comprising several trajectories) and overlaying this trajectory on a TV broadcast is per se known in the prior art. For instance, this can be achieved by calibrating a camera and tracking its position and movement in 3D space. The disadvantage of this known method is that it takes a long time to calibrate the camera, the motion tracking is not very accurate, and the TV broadcast is limited to only the calibrated camera. Another option is to make use of stationary TV broadcast cameras which are fixed to positions prior to the tournament. Since these cameras do not move, they are always oriented towards e.g. the putting green showing the same perspective. On the one hand, this makes it feasible to overlay a 3D modelled ball trajectory, since the perspective of the camera's image is known and does not change. On the other hand, this yields a major disadvantage in that if the view of the ball or the hole is obstructed, there is no way to adjust the point of view of the camera.

The objective of the invention is to provide a method for augmenting live television golf broadcasts which alleviates or eliminates at least individual disadvantages of the prior art.

This objective is solved by providing a method as defined in claim 1. Preferred embodiments of the invention are defined in the dependent claims, the description, and the drawings.

According to the invention, a method for augmenting live television golf broadcasts in real time is provided, using a broadcast camera, the method comprising the following steps:
S1) providing a virtual 3D mesh, comprising the topography of an area, a ball location within the area and a hole location within the area,
S2) calculating a ball trajectory from the ball location towards the hole location while taking into account the topography of the area,
   calculating an aiming point and an expected break relative to the hole location,
   adding both the ball trajectory and the aiming point to the 3D mesh,
S3) aligning the 3D mesh with the field of view of the broadcast camera by comparing a length scale derived from optically visible cues to the break, wherein the augmented field of view of the broadcast camera comprises the ball location and the hole location with an overlay of the ball trajectory and the aiming point.

The method according to the invention offers a simple process of overlaying accurate putt predictions onto live video feeds. The method further eliminates the lengthy and complex calibration processes required for previous systems. It works with any camera already being in use for the broadcast, significantly enhancing coverage options without adding additional equipment or setup time. It further reduces the need for specialized equipment and extensive training, lowering the overall cost of implementing augmented reality features in live broadcasts. Moreover, by directly mapping the physical features of the putting green into a 3D model, the method provides highly accurate putt predictions.

Another advantage of the method according to the invention is that a moveable broadcast camera can provide various different perspectives of the same area. Thus, even if the player stands directly in front of the ball or the hole from one point of view, the camera can easily be moved to a different place, from where a different point of view offers a clear image of player, ball and hole.

A further advantage of the present invention is that the location and orientation of the broadcast camera does not need to be tracked in real time in order to display the overlay correctly. In fact, a trained operator can easily align the 3D mesh with the field of view of the broadcast camera in several seconds. If this step is performed by a computer program, e.g. by means of an AI, this time drastically decreases.

It should be noted that "real time" in the context of the present invention means that the augmentation of the live television broadcast happens during the broadcast, as opposed to augmenting a recording of a past broadcast. In practice, this real time augmentation can be performed between two points in time during the tournament. The steps S2 to S3 of the method according to the invention can start as soon as the golf ball lands in or in the vicinity of the putting green. Augmentation should be finished before the golfer reaches the putting green, as this marks the point in time when the augmented view becomes interesting for a viewer of the broadcast. The above specified time frame is in the order of magnitude of a few minutes, such that "augmenting live television golf broadcasts in real time" is to be understood to happen within this time frame.

The aiming point refers to the specific spot on the green where a golfer should aim to ensure the ball reaches the hole. This spot is often not directly at the hole, particularly on sloped greens. The aiming point is selected based on an analysis of the green's contours, the slope, and the expected trajectory of the ball. It should be noted that there is no unique aiming point, as several aiming points can lead to the ball landing in the hole. An aiming point closer to the golfer might result in the ball just barely arriving at the hole, whereas an aiming point further away from the golfer might result in the ball landing in the hole with a certain velocity. In the context of this disclosure, the aiming point is chosen at a distance such that the distance between the ball and the hole is essentially the same as the distance between the ball and the aiming point.

It should be noted that the location of the aiming point depends on the velocity of the golf ball. For example, various velocities can be chosen, such that the aiming point could be located at various different distances from the ball location. The aiming point can also be understood as the position where the golf ball comes to a stop. In this case, the aiming point should be located at a distance from the ball location, that is equal or larger than the distance from the ball location to the hole location. For instance, in this case, the aiming point can be chosen to be located approximately 5 cm, 10 cm, 20 cm, or 30 cm behind the hole location, as seen from the ball location.

The break is the distance and direction that a golfer must aim away from the hole to account for the slope of the green. For instance, if a green slopes from left to right, the ball will naturally curve to the right as it rolls. To counteract this, a golfer might aim a certain distance to the left of the hole. This distance is referred to in terms of the break, such as "10 cm left," indicating that the golfer should aim 10 centimeters to the left of the hole to allow the ball to break, or curve, into the hole. In the context of this disclosure, the break coincides with the distance between the hole and the aiming point as defined above.

As mentioned, various choices of the location of the aiming point are possible. For instance, the aiming point might be chosen to be approximately 30 cm behind the hole location, as seen from the ball location. In this case, the break would indicate the shortest distance from the hole location to an imaginary line comprising the ball location and the aiming point.

In step S1 of the method according to the invention, the 3D mesh can be provided in several different ways. A user can manually scan the area using an appropriate scanner in order to generate a topographical map of the area. It is also possible that the 3D mesh of a given golf hole is provided to the user by the golf course. Furthermore, there are several different ways how the ball location and the hole location can be added to the 3D mesh. For example, a reference camera can be used, as will be described below in more detail. Another possibility is for the user to manually compare the 3D mesh to the area and estimate the ball position and the hole position. Another possibility is to make use of location tracking devices, for instance GPS trackers or other wireless location trackers (e.g. Bluetooth), which can be embedded into both the ball and the cup that is inserted into the hole.

In a preferred embodiment, step S1 comprises the following steps using a reference camera, wherein the field of view of the reference camera is different from the field of view of the broadcast camera:
S1a) marking the area with optically visible reference points, wherein the area preferably comprises a putting green of a golf course, wherein the field of view of a reference camera comprises the area and the reference points,
S1b) scanning the area and the reference points and generating a 3D mesh of a topography of the area based on the scan, and aligning the 3D mesh with the field of view of the reference camera by comparing the reference points,
S1c) identifying a hole location by means of the reference camera, wherein the hole location lies within the area, and adding the hole location to the 3D mesh,
S1d) identifying a ball location by means of the reference camera, wherein the ball location lies within the area, and adding the ball location to the 3D mesh.

This embodiment of the invention enables a particularly accurate determination of the ball location and the hole location. By overlaying the 3D mesh onto the field of view of the reference camera, both the ball location and the hole location can be accurately determined. This overlay can be achieved by comparing the scanned (virtual) reference points of the 3D mesh to the (recorded) reference points within the field of view of the reference camera. Once the 3D mesh and the field of view of the reference camera are precisely aligned, the locations of the ball and the hole within the area can be easily added to the 3D mesh.

The method according to the invention enables an accurate positioning of the location of the golf ball and the golf hole on a virtual 3D scan of the green. In order to achieve the highest possible accuracy, the reference camera is used. The 3D mesh of the area is positioned as a virtual overlay on top of the broadcast camera based on permanently physically visible or provisionally and removable reference points wherein the reference points of the virtual 3D mesh are overlayed over the physical world's reference points.

In step S1a, the area preferably comprises a putting green of a golf course. In the early stages of a golf game, the ball is typically airborne for the majority of its trajectory after each stroke, especially from the tee box and through the fairway. This minimizes the influence of the ground's topography in the rough or on the fairway. However, once the ball reaches the putting green, it spends more time rolling on the ground. Here, the subtle undulations and slopes of the green become critically important, as they significantly affect the ball's path towards the hole. Therefore, while the ground's characteristics in the initial part of the course are less consequential, knowing the precise topography of the putting green is important for accurate putting. Using the method according to the invention, the topography of the putting green can be accurately scanned and a high quality putt prediction overlay can be used to augment the live TV broadcast.

In steps S1c and S1d, a ball location and a hole location are identified by means of the reference camera. These positions are determined relative to the reference points. For this purpose, the focal length(s) of the reference camera's lens(es) is/are known as to guarantee an accurate identification. Other parameters that might influence the reference camera's field of view are generally known to those skilled in the art and can easily be accounted for.

In a preferred embodiment, steps S1a and S1b are performed before the live broadcast and steps S1c, S1d, S2 and S3 are performed during the live broadcast. In this embodiment, the steps of marking the area, scanning the area and generating the 3D mesh can be performed at any point before the live broadcast.

In a preferred embodiment, steps S1c, S1d, S2 and S3 are repeated for a further ball location and a further hole location. The hole position is usually changed every day. A new hole is made at a further hole location in a different part of the green, in which an insert with the flag is then placed. The old hole is then closed with the plug that has been removed from the new hole. As the topography of the area did not change, the same 3D mesh can also be used in this case for a further hole location. In other words, if the ball location and the hole location changes to a further ball location and a further hole location, steps S1c, S1d, S2 and S3 of the method according to the invention can be repeated to augment the TV broadcast for these further locations.

In a preferred embodiment, steps S1d, S2 and S3 are repeated for a further ball location. Usually there is more than one player at a golf tournament, such that the same 3D mesh can be reused for a further ball location, corresponding to a further player. In other words, if the ball location changes to a further ball location, steps S1d, S2 and S3 of the method according to the invention can be repeated to augment the TV broadcast for this further location.

In a particularly preferred embodiment, before repeating the steps, the method comprises the step of moving the broadcast camera to a different location, resulting in a further field of view, wherein the further field of view comprises the further ball location and if applicable the further hole location. The further ball location and/or the further hole location might be positioned relative to the broadcast camera in such a way that a golfer could obstruct the view of the broadcast camera, rendering the further ball location and/or the further hole location not visible. In this embodiment, the broadcast camera is moved to a different location before repeating steps S1c to S3, thus ensuring a clear view of the further ball location and/or the further hole location.

During the course of a multi-day golf tournament, the hole position usually changes every day. As the topography of the golf course does not change during this time period, it is preferable to repeat the steps S1c, S1d, S2 and S3 of the method according to the invention in order to account for the new hole location.

During play, there is usually more than one player playing on a given golf course. In this case, the topography as well as the hole location do not change, however there is a separate ball location for each player. In the context of this invention, this corresponds to an (initial) ball location as well as further ball locations. In this case, it is preferable to repeat the steps S1d, S2 and S3 of the method according to the invention in order to account for a further ball location.

In a preferred embodiment, in step S1b, scanning the area is performed using a time-of-flight sensor, preferably a LIDAR scanner, more preferably a handheld LIDAR scanner, structured light scanning or photogrammetry. LIDAR systems are highly accurate and can produce precise measurements with very fine resolution. Such systems can capture data over long distances, making it suitable for large-scale mapping and surveying, such as topographical surveys and large outdoor environments. LIDAR is not dependent on ambient light, so it works well in low light or nighttime conditions and can even penetrate through vegetation to measure ground surfaces, making it especially useful in the case of golf courses. Structured light scanning is relatively fast for capturing detailed surface geometry. Photogrammetry is often more cost-effective compared to LIDAR and structured light scanning and uses standard photographic equipment, making it accessible to a wider range of users without the need for specialized hardware.

In a preferred embodiment, in step S1b, generating a 3D mesh of the topography of the area comprises generating a point cloud based on the scan and then generating the 3D mesh based on the point cloud. A point cloud provides a highly detailed and dense collection of data points that represent the surface of the area being scanned. Each point contains precise spatial coordinates, capturing fine details of the topography. Creating a mesh from this detailed point cloud ensures that the resulting mesh accurately reflects the intricate details captured in the point cloud, leading to a more accurate and high-resolution 3D model. Point clouds can be processed to remove noise and outliers before generating the mesh. This step improves the quality of the final 3D mesh by ensuring that only relevant and accurate points are used. Point clouds can also be segmented and processed in parts, making it easier to handle large datasets. This segmentation can be crucial when dealing with large topographical surveys.

In a preferred embodiment, in step S3, aligning the 3D mesh with the field of view of the broadcast camera by comparing the length scale to the break is performed manually or automatically. Manually aligning the 3D mesh with the field of view of the broadcast camera, e.g. by an operator, is a simple solution without the need for specialized software. Automatically aligning the 3D mesh with the field of view of the broadcast camera offers a much quicker way to perform this task.

In a preferred embodiment, in step S3, the length scale can be derived from a diameter of a hole, and/or from a colored marking along a flagstick. A golf hole consists of a cylindrical insert made of plastic or metal in the surface of the green, at least 10 cm (4 inches) deep with a standardized diameter of 108 mm (4.25 inches). This hole diameter offers a reliable length scale, because it is a standardized value and because the hole is always within the field of view of the broadcast camera. The flagstick (also known as a pin) is a vertical pole, inserted into the hole insert, usually with a flag attached to its upper end. The flagstick as a whole can have an arbitrary height, such that its total height should not be used as a length scale. However, there are usually colored markings along the flagstick, indicating certain heights. For example, a flagstick might be colored black along its lower part, wherein the black colored part spans exactly one meter. Above it might be a differently colored part, spanning from the black part until the upper end of the flagstick. These colored markings are not standardized, however if their dimensions are known, they can be used as a reliable length scale. It should be noted that the flagstick can have different colors as well as a different number of colored parts compared to the example above. It is also possible that the flagstick has only one color and that tape, paint or the like is used to mark a specific height. This taped or painted marking can then also be used relative to the ground as a reliable length scale.

It is understood that the length scale is compared to the break, i.e. the distance between the aiming point and the hole. The break can be calculated from the center of the hole, from an edge of the hole or from any point within the circumference of the hole. For instance, if the break direction is "right", it is preferred to start the break from the right edge of the hole. Similarly, if the break direction is "left", it is preferred to start the break from the left edge of the hole. In these cases, the break distance is the distance from the right/left edge of the hole to the aiming point.

In a preferred embodiment, in step S1a, the optically visible reference points are being painted onto the area or being placed on the area as a physical object. Painting, e.g. spray painting, dots for 3D scanning offers the advantages of minimal intrusion, quick application, low cost, and flexibility in marker size and density, making it ideal for sensitive or large-scale projects. In contrast, placing physical objects provides high visibility and contrast, non-permanence and reusability, consistency in their respective dimensions, and enhanced geometric features, which are beneficial for environments with poor visibility or challenging surfaces. It is also possible that the reference points are placed on the area only for the duration of the scanning of the area in step S1a and the alignment of the 3D mesh with the field of view of the reference camera in step S1b.

In a preferred embodiment, the 3D mesh comprises location data, preferably GPS data. Additionally, the location data can comprise data from Galileo. The advantage of using GPS is its extensive coverage and long-standing reliability, making it the most widely used system worldwide. The advantage of using Galileo lies in its enhanced precision and integrity, by providing dual-frequency signals that reduce ionospheric errors, leading to more accurate positioning. It is further preferred if the location data is acquired during the step of scanning the area.

The steps S2 to S3 of the method can also be performed automatically by employing a suitable computing unit. Hence, a data processing device comprising means for carrying out the steps S2 to S3 of the method according to the invention can be used together with a computer program product comprising instructions which, when the program is executed by a computer, cause the computer to carry out these steps. Additionally, a computer-readable storage medium comprising such instructions may be used.

The present invention will now be described by way of illustrative examples with reference to the accompanying drawings, in which:
Fig. 1 shows a putting green and its topography, marked with reference points;
Fig. 2 shows the putting green of Fig. 1 with a ball and a hole, as seen by a reference camera;
Fig. 3 shows a putting green and its topography, not marked with reference points;
Fig. 4 shows the putting green of Fig. 3 and a laptop displaying a 3D mesh of the putting green;
Fig. 5 shows a 3D modelled mesh of the topography of the putting green of Fig. 1 with a ball location and a hole location added to the 3D mesh;
Fig. 6 shows the 3D mesh of Fig. 5 with a ball trajectory and an aiming point;
Fig. 7 shows the putting green of Fig. 1 from the point of view of a broadcast camera, wherein the 3D mesh is not properly aligned;
Fig. 8 shows the camera view of Fig. 7, wherein the 3D mesh is properly aligned; and
Fig. 9 shows a flowchart of the steps of the method according to the invention.

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete and will fully convey the aspects and features of the present invention to those skilled in the art. Processes, elements, and techniques not considered necessary to those having ordinary skill in the art for a complete understanding of the aspects and features of the present invention may not be described. In the drawings, the relative sizes of elements, layers, and regions may be exaggerated for clarity. The below-described embodiments are merely illustrative for the principles of the present invention. It is understood that modifications and variations of the arrangements and the details described herein will be apparent to others skilled in the art.

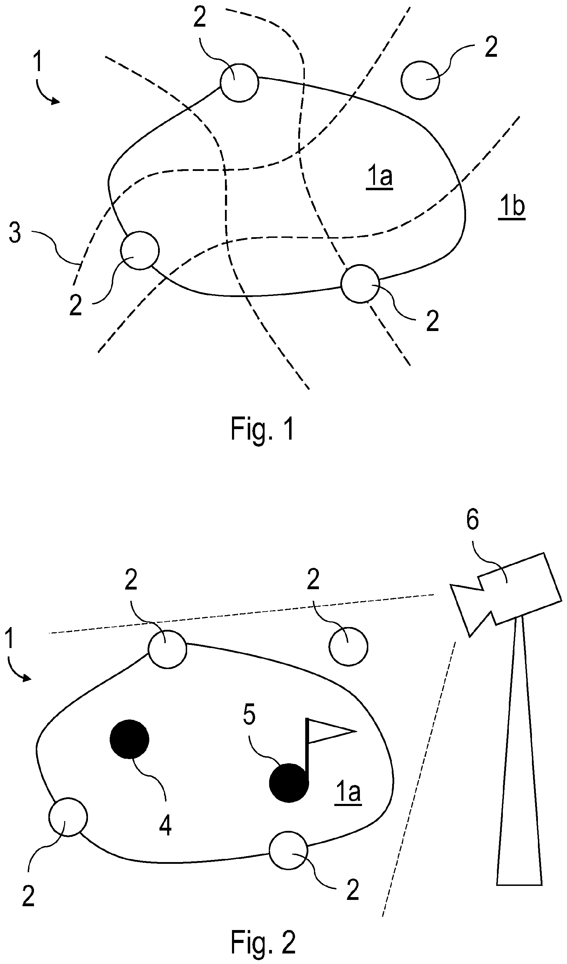

Fig. 1 shows a green complex 1 of a golf course comprising a putting green 1a and part of a surrounding fairway 1b. Along the boundary of the putting green 1a, as well as outside the putting green 1a, reference points 2 are marked, which are depicted as white circles. These reference points 2 are optically visible and can be painted on or placed on the green complex 1. In other words, the reference points 2 are all assumed to lie within the green complex 1 and can either be on the boundary of the putting green 1a or on the surrounding fairway 1b. After scanning the green complex 1 including the reference points 2, a 3D mesh 3 is generated, which reflects the topography of the green complex 1 based on the scan. In this embodiment, the green complex 1 is scanned using a handheld LIDAR scanner (not shown), which is commercially available on modern smartphones. The topography of the green complex 1 comprises undulations, slopes and the like. The 3D mesh 3 containing the topography of the green complex 1 can thus be used to reconstruct a true-to-length and true-to-angle image of the surface of the green complex 1. The generation of the 3D mesh 3 usually happens before the live TV broadcast. The reference points 2 are also added to the 3D mesh 3, such that their respective position on the green complex 1 are accurately represented in the digital model of the 3D mesh 3.

Other methods of scanning the green complex 1 are possible as well, e.g. a different time-of-flight sensor, or by using structured light scanning or photogrammetry. Structured light scanning is relatively fast for capturing detailed surface geometry. Photogrammetry is often more cost-effective compared to LIDAR and structured light scanning and uses standard photographic equipment, making it accessible to a wider range of users without the need for specialized hardware.

Furthermore, in this embodiment the 3D mesh 3 is directly generated from the scanned data. However it can be advantageous to first create a point cloud based on the scanned data and then generate the 3D mesh 3 based on that point cloud. Point clouds can be processed to remove noise and outliers before generating the 3D mesh 3, thus improving the quality of the 3D mesh 3 by ensuring that only relevant and accurate points are used.

Fig. 2 shows the green complex 1 of Fig. 1 with the reference points 2. On the putting green 1a there is a ball at a ball location 4 and a hole at a hole location 5. A reference camera 6 is located at a distance from the green complex 1. The field of view of the reference camera 6 comprises the whole green complex 1, including the reference points 2, the ball at the ball location 4 and the hole at the hole location 5. This is indicated by the dashed lines. A computing unit not shown in the figures that analyses data from the reference camera 6 or a person can now identify the ball location 4 and the hole location 5 relative to the reference points 2.

In this embodiment, the reference camera 6 can see the entire green complex 1. However, it is also possible that the field of view of the reference camera 6 does not comprise the entire green complex 1, but instead only parts of it. In any case, the field of view of the reference camera 6 must comprise at least three reference points 2 not located in a straight line, such that the position of the ball location 4 and the hole location 5 can be accurately identified relative to these reference points 2. In this case, the reference camera 6 can be instructed to pan, tilt and/or roll such that the field of view of the reference camera 6 comprises the ball location 4, the hole location 5 and at least three reference points 2. Additionally or alternatively, a wide angle lens or a super wide angle lens can be used, such that the field of view of the reference camera 6 comprises a larger portion of, preferably the entire area 1.

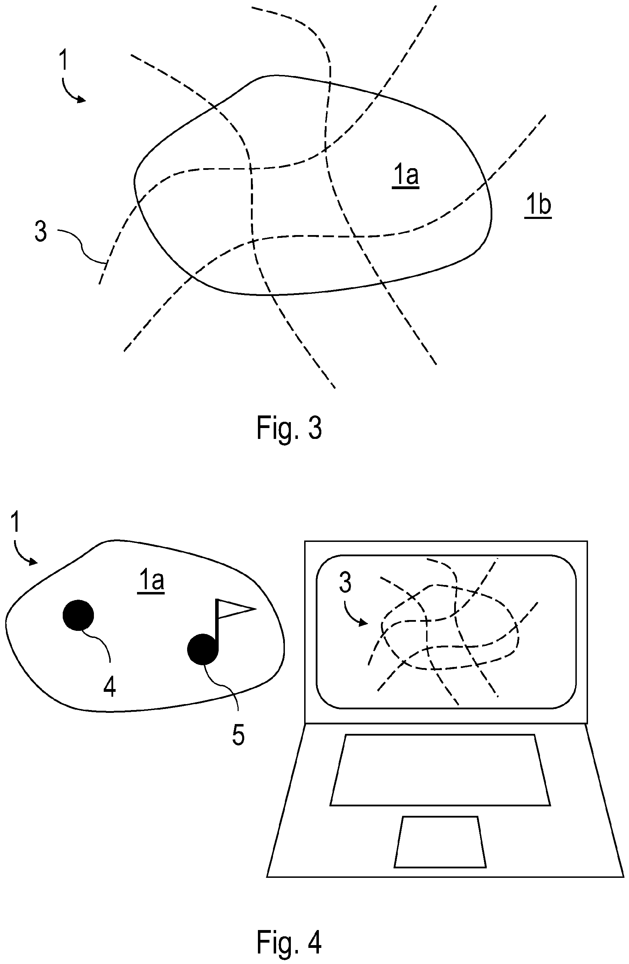

Another embodiment of the method according to the invention will now be described with reference to Figs. 3 and 4.

Fig. 3 shows a green complex 1 of a golf course comprising a putting green 1a and part of a surrounding fairway 1b. The dashed lines represent a 3D mesh 3 of the topography of the green complex 1. This 3D mesh 3 can be generated by scanning the green complex 1 with a suitable scanner (not shown). Alternatively, the 3D mesh 3 can be provided by a third party.

Fig. 4 shows the green complex 1 of Fig. 3 and a laptop, which displays the 3D mesh 3 of Fig. 3. In order to add a ball location 4 and a hole location 5 to the 3D mesh 3, a user can visually compare the displayed 3D mesh 3 to the actual green complex 1 and identify the ball location 4 and the hole location 5 based on optically visible references. For example, the user might observe that the golf ball is located approximately one meter in front of a small hill on the putting green 1a and can then manually add this location as the ball location 4 to the 3D mesh 3 using the laptop. There exist many other ways to identify the ball location 4 and the hole location 5, which are obvious to those skilled in the art.

Although the embodiment shown in Figs. 3 and 4 does not make use of reference points 2, it is of course possible to use reference points 2 in a similar way as described in the context of Figs. 1 and 2.

In summary, the 3D mesh 3 comprising the topography, the ball location 4 and the hole location 5 can be provided by means of a reference camera 6 (see Figs. 1 and 2), or by means of a manual comparison procedure (see Figs. 3 and 4), or by any other means. This concludes step S1 according to the invention.

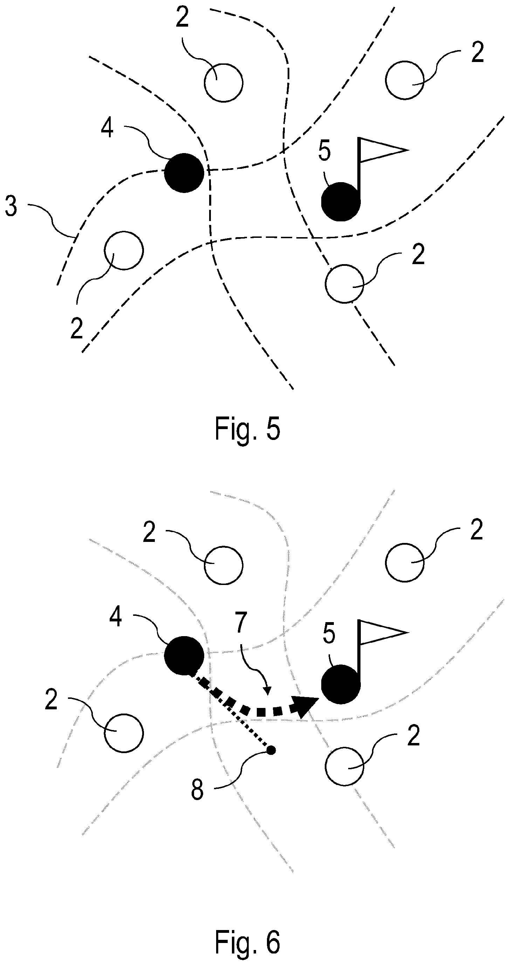

Fig. 5 shows the 3D mesh 3 of Fig. 1 including the reference points 2. The ball location 4 and the hole location 5 have been added to the 3D mesh 3, such that the 3D mesh 3 accurately represents the geometric relation between the green complex 1, the reference points 2, the ball location 4, and the hole location 5. Adding the ball location 4 and the hole location 5 to the 3D mesh 3 can be performed manually or automatically.

It is also possible that the 3D mesh 3 does not contain virtual images of the reference points 2. This also applies to each of Figs. 5 to 8.

Fig. 6 shows the 3D mesh 3 comprising the reference points 2, the ball location 4 and the hole location 5 of Fig. 5, wherein the dashed lines are greyed out for simplicity. Using an appropriate computing unit, a ball trajectory 7 and an aiming point 8 have been calculated, taking into account the topography of the green complex 1. The ball trajectory is depicted as a dashed arrow, starting from the ball location 4 and ending at the hole location 5. If the green complex 1 were a perfectly flat area, the ball trajectory would be a straight line arrow. However, due to undulations and slopes along the surface of the green complex 1, the ball will most likely take a non-straight ball trajectory 7. In the embodiment shown in Fig. 6, the ball curves to the left. The ball trajectory 7 is added to the 3D mesh 3.

The aiming point 8 is also added to the 3D mesh 3. The aiming point 8 refers to the specific spot on the green complex 1 where a golfer should aim to ensure the ball reaches the hole. The aiming point 8 is connected to the ball location 4 with a dotted straight line. As there is no unique aiming point, but instead several possible aiming points that all lead to the ball landing in the hole, the aiming point 8 is chosen at a distance such that the distance between the ball location 4 and the hole location 5 is essentially the same as the distance between the ball location 4 and the aiming point 8. If the aiming point 8 is chosen this way, an expected break can be inferred as the distance and direction from the hole location 5 to the aiming point 8. In the embodiment shown in Fig. 6, the break is approximately "20 cm right", considering that the diameter of the hole is approximately 10 cm. In other words, a golfer should aim their stroke not directly towards the hole, but instead approximately 20 cm to the right of the hole for the ball to land in the hole. Of course, other values for the expected break are possible, such as "15 cm left", "32 cm right" and the like. As is apparent from these examples, the direction (left, right) and distance of the expected break is always given in terms relative to the hole location 5. The break can be calculated from the center of the hole, from an edge of the hole and/or from any point within the circumference of the hole. For instance, if the break direction is "right", it is preferred to start the break from the right edge of the hole. Similarly, if the break direction is "left", it is preferred to start the break from the left edge of the hole. In these cases, the break distance is the distance from the right/left edge of the hole to the aiming point 8.

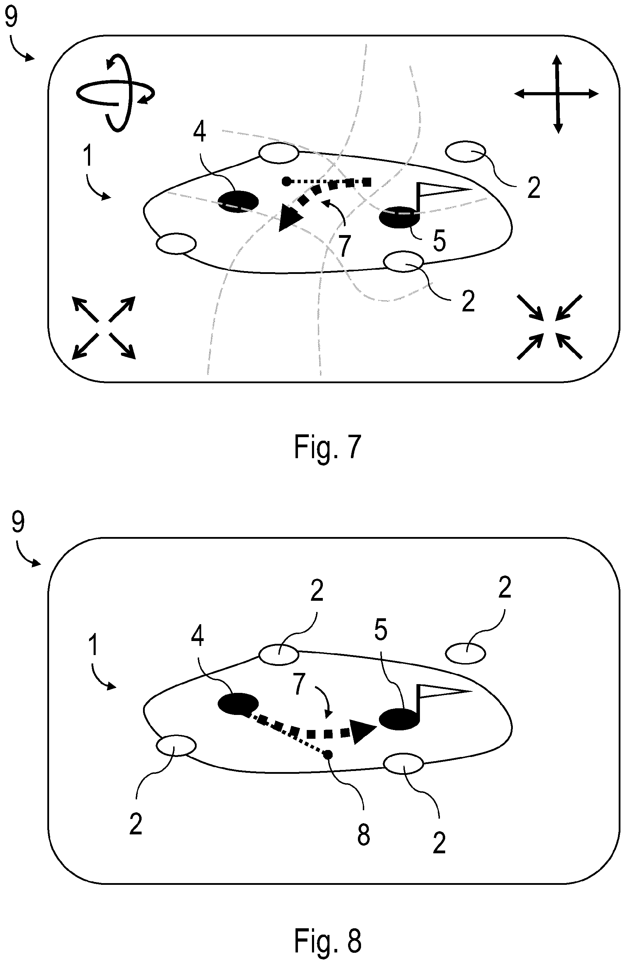

Fig. 7 shows the field of view of a broadcast camera 9, wherein the field of view of the broadcast camera 9 is different from the field of view of the reference camera 6. This is indicated in Fig. 7 by a vertically compressed drawing of the green complex 1, the reference points 2, the ball location 4 and the hole location 5, indicating a perspective view. Also shown in Fig. 7 is the 3D mesh 3, wherein for simplicity, the mesh lines have been greyed out and only the trajectory 7 and the aiming point 8 are visible in Fig. 7. In this view, the 3D mesh 3 comprising the trajectory 7 and the aiming point 8 is not accurately aligned with the field of view of the broadcast camera 9. This is for instance indicated by the fact that the ball trajectory 7 does neither start at the ball location 4 nor does it end at the hole location 5. The 3D mesh 3 now has to be adjusted and aligned with the field of view of the broadcast camera 9. This alignment process can comprise rotating (top left of Fig. 7), moving (top right), zooming in (bottom left) and/or zooming out (bottom right) the 3D mesh 3. The 3D mesh 3 can also be distorted corresponding to a change in a focal length of a camera. Moreover, the alignment process can comprise the step of positioning the 3D mesh 3 on the ground as seen by the broadcast camera 9, which yields a particularly good alignment. It will be understood by a person skilled in the art that not all of the above listed steps are necessary for this alignment process. For instance, the alignment process might be finished by positioning the 3D mesh 3 on the ground and then rotating the 3D mesh 3. Other alternatives are easily conceivable. It will be understood by a person skilled in the art that these modifications can also be translated into a motion of a virtual camera, showing the 3D mesh 3. For instance, the step of rotating the 3D mesh 3 can be understood as a corresponding motion of a virtual camera. As such, the position, orientation, focal length and/or lens features of the virtual camera can be adjusted.

The alignment of the 3D mesh 3 to the field of view of the broadcast camera 9 is understood to be completed, once the ball location 4 and the hole location 5 stored in the 3D mesh 3 coincide with the ball location 4 and the hole location 5 as seen in the field of view of the broadcast camera 9 and the break, i.e. the distance from the hole location 5 to the aiming point 8 is adjusted using the length scale derived from optically visible cues.

The alignment process can be performed manually or automatically by means of a suitable computing unit. In any case, this alignment process is performed by comparing a length scale derived from optically visible cues to the break. In the example given in the context of Fig. 6, the break was given by "20 cm right". By using the dimensions of the hole as a length scale, an operator/a computing unit can then manually/automatically rotate, move and/or zoom the 3D mesh 3 until the start of the ball trajectory 7 coincides with the ball location 4 visible in the field of view of the broadcast camera 9. Next, the 3D mesh 3 can be rotated and/or zoomed such that the end of the ball trajectory coincides with the hole location 5. Finally, the 3D mesh 3 can be rotated until the aiming point 8 is at an accurate distance from the hole. In the present example, this would be approximately two diameters of the hole towards the right, considering that the hole has a diameter of approximately 10 cm.

It will be appreciated that the alignment procedure detailed above can also be performed in a different manner and/or sequence, the details of which are easily conceivable to those skilled in the art.

In the example above, the hole diameter has been used as a length scale. However, it is also possible to use the flagstick as a length scale, wherein segments of the flagstick have been marked e.g. by a colored tape or paint to indicate a specific length. As the broadcast camera 9 is always positioned in such a way that both the ball location 4 and the hole location 5 are clearly visible, both the hole diameter and the flagstick offer a reliable length scale.

Fig. 8 shows the view of the broadcast camera 9 of Fig. 7, wherein the 3D mesh 3 has been accurately aligned with the field of view of the broadcast camera 9. The view of the broadcast camera 9 can thus be used for a live broadcast, wherein the ball trajectory 7 and the aiming point 8 are visible as an overlay over the raw camera footage. This is done in real time, i.e. during the live broadcast.

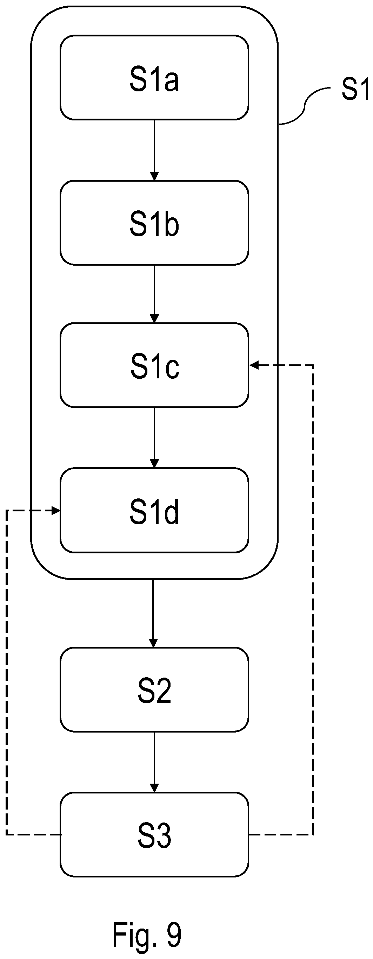

Fig. 9 schematically shows the steps S1 to S3 of the method according to the invention. Usually, the steps S1 to S3 are performed sequentially. However, it is also conceivable that some steps are performed at the same time. For instance, steps S1c and S1d could be performed sequentially, i.e. that the hole location 5 is first identified according to step S1c and added to the 3D mesh 3 and then the ball location 4 is identified according to step S1d and added to the 3D mesh 3. It is also possible that both the ball location 4 and the hole location 5 are identified first and then added to the 3D mesh 3. Similarly, steps S1a and S1b can happen simultaneously, wherein only a first part of the green complex 1 is marked (step S1a) and scanned (step S1b) and afterwards the rest of the green complex 1 is marked and scanned.

The dashed arrow line from step S3 to S1c indicates that the steps S1c to S3 can be repeated while using the same 3D mesh 3 that was generated in step S1b. If the ball location 4 and the hole location 5 change to a further ball location and a further hole location, steps S1c to S3 of the method according to the invention can be repeated to augment the TV broadcast for these further locations. The further ball location and/or the further hole location might be positioned relative to the broadcast camera 9 in such a way that a golfer could obstruct the view of the broadcast camera 9, rendering the further ball location and/or the further hole location not visible. In this case, the broadcast camera 9 can be moved to a different location before repeating steps S1c to S3, thus ensuring a clear view of the further ball location and the further hole location. During the course of a golf tournament, the hole position usually changes each day. In this case, it is preferable to repeat the steps S1c to S3 at the start of the new day.

The dashed arrow line from step S3 to S1d indicates that the steps S1d to S3 can be repeated while using the same 3D mesh 3 that was generated in step S1b and the same hole location 5 that was identified in step S1c. If the ball location 4 changes to a further ball location, steps S1d to S3 of the method according to the invention can be repeated to augment the TV broadcast for this further location. The further ball location and the hole location might be positioned relative to the broadcast camera 9 in such a way that a golfer could obstruct the view of the broadcast camera 9, rendering the further ball location and/or the hole location not visible. In this case, the broadcast camera 9 can be moved to a different location before repeating steps S1d to S3, thus ensuring a clear view of the further ball location and the hole location. Usually there is more than one player at a golf tournament, such that the same 3D mesh 3 can be reused for a further ball location, corresponding to a further player. In other words, if the ball location 4 changes to a further ball location, steps S1d to S3 of the method according to the invention can be repeated to augment the TV broadcast for this further location.

The steps S2 to S3 of the method can also be performed automatically by employing a suitable computing unit. Hence, a data processing device comprising means for carrying out the steps S2 to S3 of the method according to the invention can be used together with a computer program product comprising instructions which, when the program is executed by a computer, cause the computer to carry out these steps. Additionally, a computer-readable storage medium comprising such instructions may be used.

Performing the steps S2 to S3 automatically is especially preferred, since these steps of the method are usually performed during the live broadcast. So in order to minimize delay for a viewer of the broadcast, it is beneficial if the generation of the ball trajectory 7 based on the steps S2 to S3 happens as quickly as possible.

It can be seen that various features are grouped together in a single embodiment for the purpose of streamlining the disclosure of the invention. This method of disclosure is not to be interpreted as reflecting an intention that the claimed embodiments require more features than are expressly recited in each claim. Rather, as the claims reflect, inventive subject matter lies in less than features of a single disclosed embodiment.

## Claims

1. A method for augmenting live television golf broadcasts in real time using a broadcast camera (9), the method comprising the following steps:
S1) providing a virtual 3D mesh (3), comprising the topography of an area (1), a ball location (4) within the area (1) and a hole location (5) within the area (1),
S2) calculating a ball trajectory (7) from the ball location (4) towards the hole location (5) while taking into account the topography of the area (1),
calculating an aiming point (8) and an expected break relative to the hole location (5), adding both the ball trajectory (7) and the aiming point (8) to the 3D mesh (3),
S3) aligning the 3D mesh (3) with the field of view of the broadcast camera (9) by comparing a length scale derived from optically visible cues to the break, wherein the augmented field of view of the broadcast camera (9) comprises the ball location (4) and the hole location (5) with an overlay of the ball trajectory (7) and the aiming point (8).

2. The method according to claim 1, wherein step S1 comprises the following steps using a reference camera (6), wherein the field of view of the reference camera (6) is different from the field of view of the broadcast camera (9):
S1a) marking the area (1) with optically visible reference points (2), wherein the area (1) preferably comprises a putting green (1a) of a golf course, wherein the field of view of a reference camera (6) comprises the area (1) and the reference points (2),
S1b) scanning the area (1) and the reference points (2) and generating a 3D mesh (3) of a topography of the area (1) based on the scan, and aligning the 3D mesh (3) with the field of view of the reference camera (6) by comparing the reference points (2),
S1c) identifying a hole location (5) by means of the reference camera (6), wherein the hole location (5) lies within the area (1), and adding the hole location (5) to the 3D mesh (3),
S1d) identifying a ball location (4) by means of the reference camera (6), wherein the ball location (4) lies within the area (1), and adding the ball location (4) to the 3D mesh (3).

3. The method according to claim 2, wherein steps S1a and S1b are performed before the live broadcast and steps S1c, S1d, S2 and S3 are performed during the live broadcast.

4. The method according to claims 2 or 3, wherein steps S1c, S1d, S2 and S3 are repeated for a further ball location (4) and a further hole location (5).

5. The method according to any of claims 2 to 4, wherein steps S1d, S2 and S3 are repeated for a further ball location (4).

6. The method according to claim 4 or 5, wherein before repeating the steps, the method comprises the step of moving the broadcast camera (9) to a different location, resulting in a further field of view, wherein the further field of view comprises the further ball location (4) and if applicable the further hole location (5).

7. The method according to any of claims 2 to 6, wherein in step S1b, scanning the area (1) is performed using a time-of-flight sensor, preferably a LIDAR scanner, more preferably a handheld LIDAR scanner, structured light scanning or photogrammetry.

8. The method according to any of claims 2 to 7, wherein in step S1b, generating a 3D mesh (3) of the topography of the area (1), comprises generating a point cloud based on the scan and then generating the 3D mesh (3) based on the point cloud.

9. The method according to any of the previous claims, wherein in step S3, aligning the 3D mesh (3) with the field of view of the broadcast camera (9) by comparing the length scale to the break is performed manually or automatically.

10. The method according to any of the previous claims, wherein in step S3, the length scale can be derived from a diameter of a hole, and/or from a colored marking along a flagstick.

11. The method according to any of claims 2 to 10, wherein in step S1a, the optically visible reference points (2) are being painted onto the area (1) or being placed on the area (1) as a physical object.

12. The method according to any of the previous claims, wherein the 3D mesh (3) comprises location data, preferably GPS data.

13. A data processing device comprising means for carrying out the steps S2 to S3 of the method according to any one of claims 1 to 12.

14. A computer program product comprising instructions which, when the program is executed by a computer, cause the computer to carry out the steps S2 to S3 of the method according to any one of claims 1 to 12.

15. A computer-readable storage medium comprising instructions which, when executed by a computer, cause the computer to carry out the steps S2 to S3 of the method according to any one of claims 1 to 12.
